# FASCICULE DE BREVET EUROPEEN

(11) **EP 1 499 448 B1**
(45) Date de publication et mention de la délivrance du brevet: **14.09.2005**
(21) Numéro de dépôt: 03746333.8
(22) Date de dépôt: 10.04.2003
(51) Int. Cl.: B05B 11/00, F16J 1/00, F04B 53/14

(54) **POMPE DE DISTRIBUTION DE PRODUIT FLUIDE**
VERTEILERPUMPE FÜR FLUIDPRODUKT
DISTRIBUTION PUMP FOR A FLUID PRODUCT

(30) Priorité: 17.04.2002 FR 0204808
(43) Date de publication de la demande: 26.01.2005
(73) Titulaire: Valois SAS, 27110 Le Neubourg (FR)
(72) Inventeur: PETIT, Ludovic, F-27110 Vitot (FR); THOMAS, Katia, F-27110 Epegard (FR)
(74) Mandataire: CAPRI
(86) Numéro de dépôt international: PCT/FR2003/001141
(87) Numéro de publication internationale: WO 2003/086645

(56) Documents cités:
- FR-A- 2 560 160

## Description

La présente invention concerne une pompe de distribution de produit fluide à actionnement manuel, ainsi qu'un dispositif de distribution de produit fluide comportant une telle pompe.

Un tel dispositif est divulgé dans le document FR-A-2560160, qui montre une pompe de distribution selon le préambule de la revendication 1.

De manière connue, une pompe comporte généralement un corps de pompe dans lequel coulisse un piston entre une position de repos et une position de distribution, pour distribuer du produit contenu dans la pompe, notamment dans une chambre de pompe. Un organe de butée est généralement emmanché dans le bord supérieur du corps de pompe pour définir la position de repos du piston. Cet organe de butée peut par exemple être réalisé sous la forme d'une virole qui coopère avec le piston en position de repos de celui-ci. Habituellement, le piston comporte une lèvre d'étanchéité inférieure et une lèvre d'étanchéité supérieure, cette lèvre d'étanchéité supérieure assurant l'étanchéité avec le corps de pompe. L'étanchéité entre le piston et la virole est généralement réalisée au niveau de surfaces de contact radiales entre un bord radial inférieur de la virole et une surface radiale correspondante du piston. Cette mise en oeuvre peut présenter un certain nombre d'inconvénients. D'une part, l'étanchéité entre le piston et la virole n'est pas optimale, puisqu'elle n'est pas réalisée au moyen d'une partie souple déformable telle qu'une lèvre d'étanchéité, comme c'est le cas avec le corps de pompe. D'autre part, afin d'assurer une bonne étanchéité entre la virole et le piston, il est nécessaire d'avoir en position de repos une force relativement importante exercée par le ressort de rappel de la pompe pour que les surfaces radiales de contact entre la virole et le piston assurent une étanchéité suffisante. Or, une force relativement forte en position de repos de la pompe implique un effort d'actionnement important de la pompe, puisque le ressort de rappel ne peut pas être complètement détendu en position de repos. D'autre part, la position de butée étant définie par le point d'étanchéité entre la virole et le piston, les tolérances de fabrication des différents composants impliquent que cette position de butée n'est pas constante, mais qu'elle peut varier en fonction de ses tolérances de fabrication. Une modification, même légère, de la position de repos du piston peut avoir des conséquences sur le dosage du produit lors de l'actionnement de la pompe.

La présente invention a pour but de fournir une pompe de distribution de produit fluide qui ne reproduit pas les inconvénients susmentionnés.

La présente invention a ainsi pour but de fournir une pompe de distribution de produit fluide qui améliore l'étanchéité entre le piston, le corps de pompe et l'organe de butée, notamment la virole.

La présente invention a également pour but de fournir une telle pompe de distribution de produit fluide pour laquelle l'effort d'actionnement, c'est à dire la force que l'utilisateur doit exercer pour actionner la pompe, est diminuée.

La présente invention a également pour but de fournir une telle pompe de distribution de produit fluide dans laquelle la position de butée, à savoir la position de repos du piston de la pompe est constante, malgré les tolérances de fabrication des différents composants, à savoir du corps de pompe, du piston ou de la virole.

La présente invention a également pour but de fournir une telle pompe de distribution de produit fluide qui soit simple et peu coûteuse à fabriquer et à assembler.

La présente invention a donc pour objet une pompe de distribution de produit fluide, comportant un corps de pompe et un piston coulissant de manière étanche dans ledit corps de pompe entre une position de repos et une position de distribution, ledit piston comportant au moins une lèvre d'étanchéité supérieure en contact étanche avec ledit corps de pompe, ladite pompe comportant un organe de butée, tel qu'une virole, emmanché dans le bord supérieur du corps de pompe et coopérant avec ledit piston pour définir sa position de repos, caractérisée en ce que la lèvre supérieure du piston comporte une première partie de lèvre coopérant de manière étanche avec le corps de pompe et une seconde partie de lèvre coopérant de manière étanche avec ladite virole en position de repos, lesdites première et seconde parties de lèvres étant environ parallèles et espacées radialement l'une de l'autre.

Avantageusement, la seconde partie de lèvre est moins épaisse que la première partie de lèvre, de sorte qu'elle est plus flexible et se déforme pour compenser les tolérances de fabrication de la virole et/ou du corps de pompe et/ou du piston.

La présente invention a également pour objet un dispositif de distribution de produit fluide comportant une pompe telle que définie ci-dessus.

D'autres caractéristiques et avantages de la présente invention apparaîtront plus clairement au cours de la description détaillée suivante d'un mode de réalisation avantageux de celle-ci, faite en référence aux dessins joints, donnés à titres d'exemples non limitatifs et sur lesquels :
- la figure 1 est une vue schématique en section transversale d'une pompe de distribution de produit fluide à laquelle s'applique la présente invention ; et
- la figure 2 est une vue schématique à échelle agrandie d'une partie de la pompe de la figure 1, montrant l'invention selon un mode de réalisation avantageux de celle-ci.

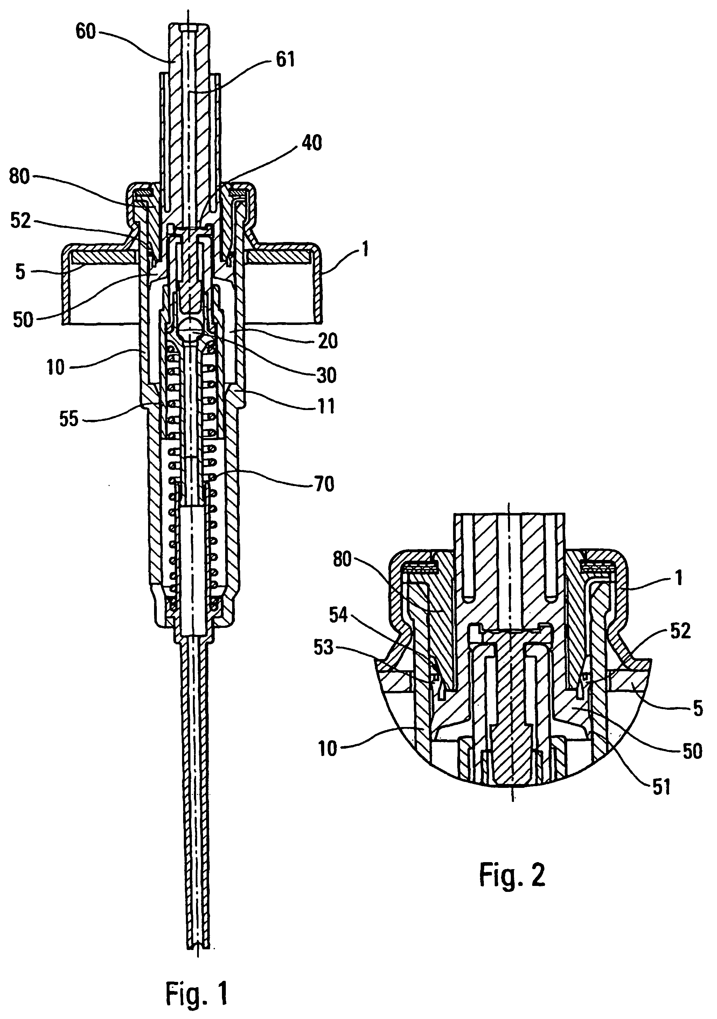

La figure 1 montre une pompe de distribution de produit fluide particulière à laquelle s'adapte la présente invention. Il est toutefois clair que la présente invention s'applique à toutes les pompes de distribution de produit fluide dans lesquelles un piston coulisse dans un corps de pompe, et où la position de repos du piston est définie par un organe de butée, par exemple une virole. La présente invention n'est donc nullement limitée à la pompe représentée sur la figure 1 et qui va être décrite ci-après.

La pompe de la figure 1 comporte un corps de pompe 10 dans lequel coulisse un piston 50 entre une position de repos et une position de distribution. La position de repos est définie par un organe de butée, qui dans l'exemple représenté est une virole 80 emmanchée dans le bord supérieur du corps de pompe. La position de distribution peut être définie par un épaulement radial 11 du corps de pompe contre lequel vient buter le piston 50 en position de distribution. Un second piston 55 coulisse dans une partie de diamètre réduit du corps de pompe et une chambre de pompe 20 est définie entre le piston 50 et le piston 55. La chambre de pompe comporte un clapet d'entrée 30 et un clapet de sortie 40. Le piston 50 est relié, de préférence de manière monobloc, à une tige d'actionnement 60, de préférence creuse et qui comporte un canal d'expulsion 61. Un ressort de rappel 70 est prévu pour ramener automatiquement la pompe vers sa position de repos après chaque actionnement. La pompe représentée sur la figure 1 peut être assemblée sur un réservoir (non représenté) au moyen d'une bague de fixation 1 qui peut être quelconque, et notamment vissable, sertissable ou encliquetable. Généralement, un joint d'étanchéité 5 est interposé entre la bague de fixation 1 et le bord supérieur du réservoir (non représenté). Lorsque l'utilisateur souhaite utiliser la pompe de la figure 1, il exerce une force axiale sur la tige d'actionnement 60 qui est transmise au piston 50. Le second piston 55 se déplace plus rapidement que le piston 50 en raison des différences de diamètre, et ce second piston 55 est adapté à ouvrir mécaniquement le clapet de sortie 40 en fin de course d'actionnement du piston 50 pour distribuer le produit contenu dans la chambre de pompe 20. Lorsque l'utilisateur relâche son effort sur la tige d'actionnement 60, la pompe est ramenée dans la position de repos par le ressort de rappel 70.

La figure 2 montre à échelle agrandie la partie de la pompe incorporant la présente invention. Selon la présente invention, la lèvre d'étanchéité supérieure 52 du piston 50 comporte une première partie de lèvre 53 et une seconde partie de lèvre 54. La première partie de lèvre 53 coopère de manière étanche avec le corps de pompe 10 en toute position du piston 50. La seconde partie de lèvre 54 coopère de manière étanche avec la virole 80, lorsque le piston 50 est en position de repos. Comme représenté sur la figure 2, les première et seconde parties de lèvres 53, 54 sont environ parallèles et sont espacées radialement l'une de l'autre. Ainsi, l'étanchéité entre le piston 50 et la virole 80, est réalisée au niveau de la seconde partie de lèvre 54 et ne doit plus nécessairement être réalisée au niveau du bord inférieur radial de la virole 80 comme précédemment. L'étanchéité est donc améliorée, puisque cette étanchéité est obtenue au moyen d'une lèvre 54 souple et déformable, qui garantit les meilleures performances d'étanchéité. De ce fait, le ressort de rappel 70 de la pompe peut avoir une raideur inférieure puisqu'il n'est plus nécessaire d'exercer une force relativement importante sur le piston 50 en position de repos pour qu'il assure cette étanchéité avec la virole 80. L'effort d'actionnement de la pompe est donc diminué grâce à la présente invention. D'autre part, le point d'étanchéité entre le piston 50 et la virole 80 est déplacé au niveau de la seconde partie de lèvre 54. L'étanchéité n'est donc plus réalisée au niveau du point de butée entre le bord inférieur radial de la virole 80 et le piston 50, de sorte que les tolérances de fabrication des différents composants de la pompe, à savoir du corps de pompe 10, du piston 50, ou de la virole 80 peuvent être compensés par la structure de la lèvre supérieure 52, et en particulier par ces deux parties de lèvres 53 et 54. Avantageusement, la seconde partie de lèvre 54 peut être moins épaisse que la première partie de lèvre 53 de sorte qu'elle est plus flexible. Dans ce cas, elle peut se déformer pour compenser les tolérances de fabrication de la virole 80 et/ou du corps de pompe 10 et/ou du piston 50. Bien entendu, la flexibilité, et plus généralement les dimensions des deux parties de lèvres 53 et 54 du piston 50 peuvent être adaptées en fonction des exigences. En particulier, les deux parties de lèvres 53 et 54 ne sont pas nécessairement de longueur identique, comme cela est représenté sur la figure 2, mais elles pourraient avoir des longueurs ou formes différentes, en fonction de la forme de la virole et/ou du corps de pompe.

Bien que la présente invention ait été décrite en référence à un mode de réalisation particulier de celle-ci, il est entendu qu'un homme du métier peut y apporter toutes modifications sans sortir du cadre de la présente invention tel que défini par les revendications annexées.

## Revendications

1. Pompe de distribution de produit fluide à actionnement manuel, comportant un corps de pompe (10) et un piston (50) coulissant de manière étanche dans ledit corps de pompe (10) entre une position de repos et une position de distribution, ledit piston comportant au moins une lèvre d'étanchéité supérieure (52) en contact étanche avec ledit corps de pompe (10), ladite pompe comportant un organe de butée (80), tel qu'une virole, emmanché dans le bord supérieur du corps de pompe (10) et coopérant avec ledit piston (50) pour définir sa position de repos, **caractérisée en ce que** la lèvre supérieure (52) du piston (50) comporte une première partie de lèvre (53) coopérant de manière étanche avec le corps de pompe (10) et une seconde partie de lèvre (54) coopérant de manière étanche avec ladite virole (80) en position de repos, lesdites première et seconde parties de lèvres (53, 54) étant environ parallèles et espacées radialement l'une de l'autre.

2. Pompe selon la revendication 1, dans laquelle la seconde partie de lèvre (54) est moins épaisse que la première partie de lèvre (53), de sorte qu'elle est plus flexible et se déforme pour compenser les tolérances de fabrication de la virole (80) et/ou du corps de pompe (10) et/ou du piston (50).

3. Dispositif de distribution de produit fluide, **caractérisé en ce qu'**il comporte une pompe selon l'une quelconque des revendications précédentes.

## Patentansprüche

1. Manuell betätigbare Pumpe zum Verteilen eines Fluiderzeugnisses, aufweisend einen Pumpenkörper (10) und einen Kolben (50), der in dem Pumpenkörper (10) zwischen einer Ruhestellung und einer Verteilungsstellung dicht gleitbeweglich ist, wobei der Kolben zumindest eine sich im dichten Kontakt mit dem Pumpenkörper (10) befindliche obere Dichtlippe (52) umfasst, wobei die Pumpe ein Anschlagorgan (80) umfasst, wie etwa einen Ring, der in den oberen Rand des Pumpenkörpers (10) gepresst ist und-mit dem Kolben (50) zur Festlegung der Ruhestellung zusammenwirkt, **dadurch gekennzeichnet, dass** die obere Dichtlippe (52) des Kolbens (50) einen ersten Dichtlippenteil (53) umfasst, der mit dem Pumpenkörper (10) dicht zusammenwirkt, und einen zweiten Dichtlippenteil (54), der mit dem Ring (80) in Ruhestellung dicht zusammenwirkt, wobei die ersten und zweiten Dichtlippenteile (53, 54) in etwa parallel sowie radial voneinander beabstandet verlaufen.

2. Pumpe nach Anspruch 1, wobei der zweite Dichtlippenteil (54) nicht so dick ist wie der erste Dichtlippenteil (53), so dass er flexibler ist und sich verformt, um Herstellungstoleranzen des Rings (80) und/oder des Pumpenkörpers (10) und/oder des Kolbens (50) zu kompensieren.

3. Vorrichtung zur Verteilung eines Fluiderzeugnisses, **dadurch gekennzeichnet, dass** sie eine Pumpe nach einem der vorangehenden Ansprüche umfasst.

## Claims

1. A manually-actuated fluid dispenser pump including a pump body (10) and a piston (50) mounted to slide in leaktight manner in said pump body (10) between a rest position and a dispensing position, said piston being provided with at least a top sealing lip (52) in leaktight contact with said pump body (10), said pump including an abutment member (80) such as a ferrule, fitted into the top edge of the pump body (10) and co-operating with said piston (50) to define its rest position, said fluid dispenser pump being **characterized in that** the top lip (52) of the piston (50) is made up of a first lip portion (53) co-operating in leaktight manner with the pump body (10) and of a second lip portion (54) co-operating in leaktight manner with said ferrule (80) in the rest position, said first and second lip portions (53, 54) being substantially parallel and spaced apart radially from each other.

2. A pump according to claim 1, in which the second lip portion (54) is thinner than the first lip portion (53) so that it is more flexible and is deformed to compensate for the manufacturing tolerances of the ferrule (80) and/or of the pump body (10) and/or of the piston (50).

3. A fluid dispenser device, **characterized in that** it includes a pump according to any preceding claim.
